# EUROPEAN PATENT SPECIFICATION

(11) **EP 3 546 176 B1**
(45) Date of publication and mention of the grant of the patent: **14.10.2020**
(21) Application number: 19164246.1
(22) Date of filing: 21.03.2019
(51) Int. Cl.: B29C 45/28, B29C 45/84, B29C 45/17

(54) **INJECTION MOLDING MACHINE**
SPRITZGIESSMASCHINE
MACHINE DE MOULAGE À INJECTION

(30) Priority: 30.03.2018 JP 2018070265
(43) Date of publication of application: 02.10.2019
(73) Proprietor: Sumitomo Heavy Industries, Ltd., Tokyo 141-6025 (JP)
(72) Inventor: KAWASAKI, Kazuma, Chiba-shi, Chiba, 263-0001 (JP)
(74) Representative: Louis Pöhlau Lohrentz

(56) References cited:
- EP-A2- 1 297 392
- US-A1- 2016 332 350
- US-B2- 9 782 921

## Description

### BACKGROUND OF THE INVENTION

### Field of the Invention

Present invention relates to an injection molding machine.

### Description of Related Art

As an injection mold, a hot runner mold is known, in which a runner is heated and controlled by a heater, a molding material is kept in a fluidized state at all times, and thus, only a molding product can be taken out. In the hot runner mold, a valve gate is provided between the runner and a cavity, and when filling of the molding material is not applied, a valve pin is inserted into the gate so as to close the gate, and when the filling is applied, the valve pin moves rearward to open the gate. The valve pin or the cavity may be damaged by a contact or the like accompanying an operation of the valve gate, and thus, a technology for preventing the damage is disclosed (for example, Japanese Unexamined Patent Publication No. 2014-240162) . European Patent publication 1297392A2 discloses a human machine interface for a molding. United States patent 9,782,921B2 discloses a controller on an injection molding machine . United States patent publication 2016/332350A1 discloses the injection molding method of plastic materials into the cavity of a mold.

### SUMMARY OF THE INVENTION

In the hot runner mold, a stationary mold is constituted by a cavity plate having a gate of a cavity space and a runner plate having the runner connected to the gate, and when maintenance of the stationary mold, replacement of the cavity plate according to change of the molding product, or the like is performed, it is possible to remove the cavity plate.

In the hot runner mold, when the cavity plate is removed, if the valve pin is inserted into the gate of the cavity plate, the valve pin and the cavity plate come into contact with each other, and thus, the valve pin and the cavity plate may be damaged. For this reason, the valve pin is moved rearward using an operation button, the molding material is cooled and solidified, and thereafter, the cavity plate is removed. Here, if the gate is opened, there is a concern that the molding material in the runner vigorously leaks from the gate. The valve pin is moved rearward and the gate is opened only while the operation button being pressed such that the opening of the gate is performed only when necessary. Accordingly, the gate is prevented from being opened unintentionally. However, performing the operation of moving the valve pin rearward by the operation button until the above-described molding material is cooled and solidified requires continuously pressing the operation button all the while, resulting in poor workability.

The present invention is made in consideration of the above-described problems, and an object thereof is to improve workability of removing the cavity plate in the hot runner mold.

According to an aspect of an embodiment, there is provided an injection molding machine including: a cavity plate which includes a gate of a cavity space; a runner plate which includes a runner connected to the gate; a valve pin which closes the gate, the runner and the cavity space being cut off from each other or communicating with each other by the valve pin; a drive unit which drives the valve pin; a control unit which controls the drive unit; and an operation unit which performs an operation input for transmitting a command for opening the gate by the control unit, in which the operation unit includes a button, and the control unit continuously transmits a command for opening the gate if the button is pressed.

According to the aspect of the embodiment, it is possible to improve workability of removing the cavity plate in the hot runner mold.

### BRIEF DESCRIPTION OF THE DRAWINGS

Fig. 1 is a side view showing a state when a mold opening of an injection molding machine according to an embodiment is completed.
Fig. 2 is a side view showing a state when a mold of the injection molding machine according to the embodiment is clamped.
Fig. 3 is a sectional view showing a stationary mold and a movable mold when the mold is opened according to the embodiment.
Fig. 4 is a sectional view showing the stationary mold and the movable mold when the mold is closed according to the embodiment.
Figs. 5A and 5B are views showing a distal end portion of a valve pin according to the embodiment and a periphery thereof.
Fig. 6 is a flowchart showing processes from the mold closing to the molding opening according to the embodiment.
Figs. 7A and 7B are views showing the distal end portion of the valve pin and the periphery thereof in a state where a runner plate and a cavityplate of the stationary mold are separated from each other according to the embodiment.
Fig. 8 is a functional block diagram showing components of a control unit according to the embodiment.
Fig. 9 is a flowchart showing a process of replacing the cavity plate of the stationary mold according to the embodiment.

### DETAILED DESCRIPTION OF THE INVENTION

Hereinafter, embodiments of the present invention will be described with reference to the drawings. In each drawing, the same or corresponding reference numerals are assigned to the same or corresponding configurations, and descriptions thereof are omitted.

### (Injection Molding Machine)

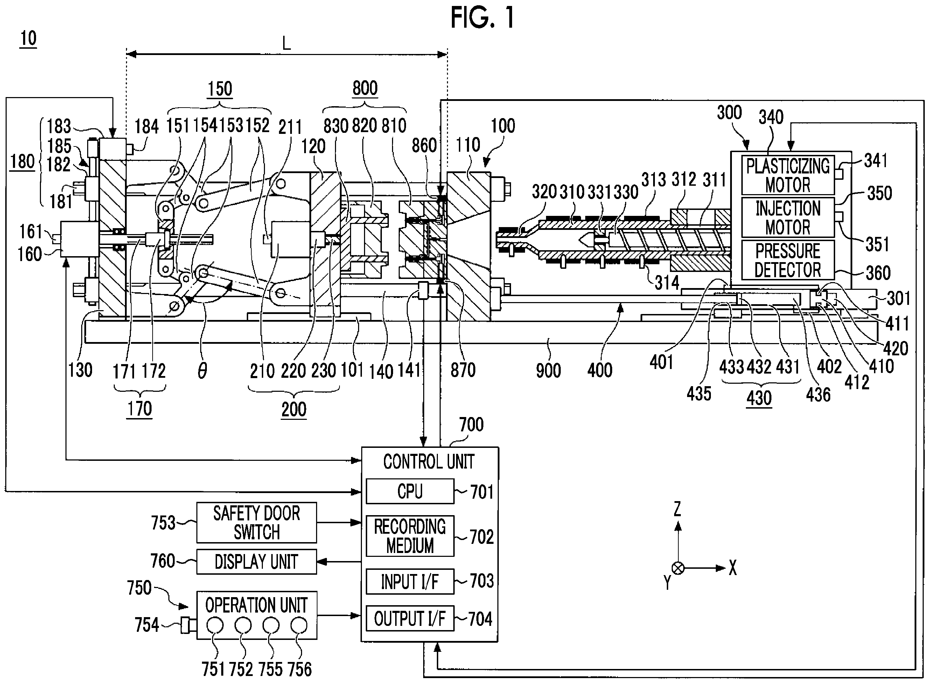

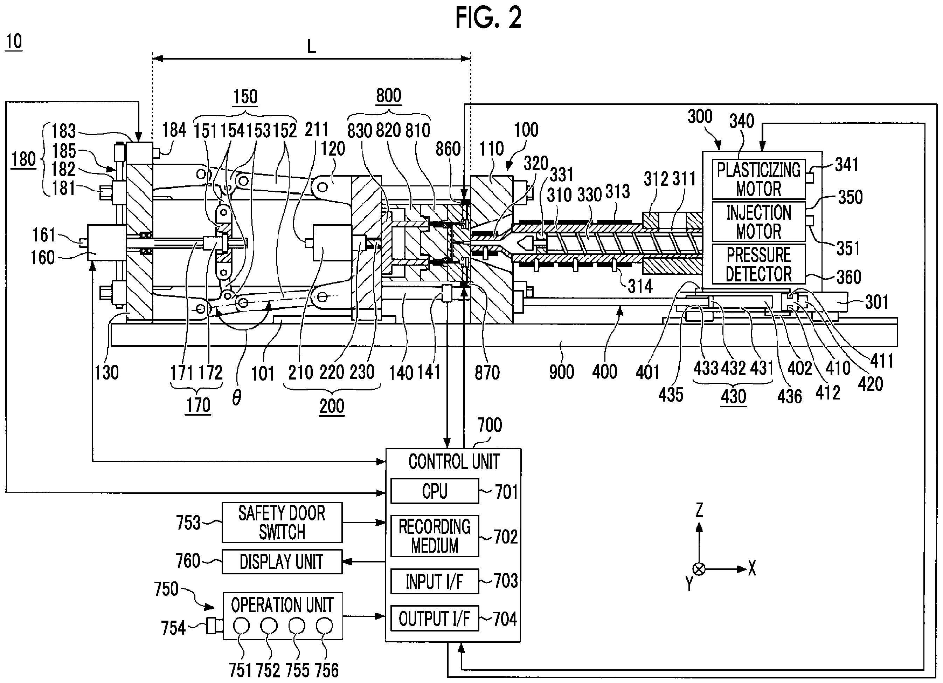

Fig. 1 is a diagram showing a state when a mold opening of an injection molding machine according to an embodiment is completed. Fig. 2 is a diagram showing a state when a mold of the injection molding machine according to the embodiment is clamped. In Figs. 1 and 2, an X direction, a Y direction, and a Z direction are directions perpendicular to each other. The X direction and the Y direction indicate a horizontal direction, and the Z direction indicates a vertical direction. In a case where a mold clamping unit 100 is a horizontal type mold clamping unit, the X direction is mold opening and closing directions, and the Y direction is a width direction of an injection molding machine 10. As shown in Figs. 1 and 2, the injection molding machines 10 includes the mold clamping unit 100, an ejector unit 200, an injection unit 300, a movement unit 400, a control unit 700, and a frame 900. Hereinafter, each component of the injection molding machine 10 will be described.

### (Mold Clamping Unit)

In descriptions of the mold clamping unit 100, a movement direction (right direction in Figs. 1 and 2) of a movable platen 120 when a mold is closed is defined as a front side, and a movement direction (left direction in Figs. 1 and 2) of the movable platen 120 when the mold is open is defined as a rear side.

The mold clamping unit 100 performs closing, clamping, and opening on a mold unit 800. For example, the mold clamping unit 100 is a horizontal type clamping unit and the mold opening and closing directions are the horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame 900. A stationary mold 810 is attached to a surface of the stationary platen 110 facing the movable platen 120.

The movable platen 120 is movable in the mold opening and closing directions with respect to the frame 900. A guide 101 which guides the movable platen 120 is placed on the frame 900. A movable mold 820 is attached to a surface of the movable platen 120 facing the stationary platen 110.

The movable platen 120 moves forward or rearward with respect to the stationary platen 110, and thus, closing, clamping, and opening of the mold are performed. The mold unit 800 includes the stationary mold 810 and the movable mold 820.

The toggle support 130 is connected so as to be separated from the stationary platen 110, and is placed on the frame 900 to be movable in mold opening and closing directions . In addition, the toggle support 130 may be movable along a guide which is placed on the frame 900. The guide of the toggle support 130 may be also used as the guide 101 of the movable platen 120.

In addition, in the present embodiment, the stationary platen 110 is fixed to the frame 900, and the toggle support 130 is movable in the mold opening and closing directions with respect to the frame 900. However, the toggle support 130 may be fixed to the frame 900, and the stationary platen 110 may be movable in the mold opening and closing directions with respect to the frame 900.

The stationary platen 110 and the toggle support 130 are connected to each other with a gap L in the mold opening and closing directions by the tie bar 140. A plurality of (for example, four) tie bars 140 may be used. The tie bars 140 are parallel in the mold opening and closing directions and extend according to a mold clamping force. A tie bar strain detector 141 which detects strain of the tie bar 140 may be provided in at least one tie bar 140. The tie bar strain detector 141 sends a signal indicating a detection result to the control unit 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each link group includes a first link 152 and a second link 153 which are bendably/strechably connected to each other by pins or the like. The first link 152 is attached to the movable platen 120 so as to be oscillated by pins or like and the second link 153 is attached to the toggle support 130 so as to be oscillated by pins or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a mold clamping process, a mold opening process, or the like under the control of the control unit 700.

In the mold closing process, the mold clamping motor 160 is driven to move the crosshead 151 forward to a mold closing completion position at a set speed. Accordingly, the movable platen 120 moves forward and the movable mold 820 comes into contact with the stationary mold 810. For example, a position or speed of the crosshead 151 is detected using a mold clamping motor encoder 161 or the like. The mold clamping motor encoder 161 detects the rotation of the mold clamping motor 160 and sends a signal indicating the detection result to the control unit 700. In addition, a crosshead position detector which detects the position of the crosshead 151 and a crosshead speed detector which detects the speed of the crosshead 151 are not limited to the mold clamping motor encoder 161, and a general detector can be used. In addition, a movable platen position detector which detects the position of the movable platen 120 and a movable platen speed detector which detects the speed of the movable platen 120 are not limited to the mold clamping motor encoder 161, and a general detector can be used.

In the mold clamping process, the mold clamping motor 160 is further driven to further move the crosshead 151 forward from the mold closing completion position to a mold clamping position, and thus, a mold clamping force is generated. When the mold is clamped, a cavity space 801 (refer to Fig. 2) is formed between the movable mold 820 and the stationary mold 810, and the cavity space 801 is filled with a liquid molding material by the injection unit 300. A filled molding material is solidified, and thus, a molding product can be obtained. A plurality of cavity spaces 801 may be provided, and in this case, a plurality of molding products can be simultaneously obtained.

In the mold opening process, the mold clamping motor 160 is driven to move the crosshead 151 rearward from the mold opening start position to a mold opening completion position at a set speed. Accordingly, the movable platen 120 moves rearward, and the movable mold 820 is separated from the stationary mold 810. Thereafter, the ejector unit 200 ejects the molding product from the movable mold 820.

Setting conditions in the mold closing process and the mold clamping process are collectively set as a series of setting conditions. For example, the speed or positions (including mold closing start position, speed switching position, mold opening/closing completion position, and mold clamping position) of the crosshead 151 and the mold clamping force in the mold closing process and the mold clamping process are collectively set as a series of setting conditions. The mold opening/closing start position, the speed switching position, the mold closing completion position, and the mold clamping position are arranged in this order from the rear side to the front side and indicate start points and end points of sections where the speed is set. The speed is set for each section. The speed switching position may be one or more. The speed switching position may not be set. Only one of the mold clamping position and the mold clamping force may be set.

Setting conditions are similarly set in the mold opening process. For example, the speed or positions (including mold opening start position, speed switching position, and mold opening completion position) of the crosshead 151 in the mold opening process are collectively set as a series of setting conditions. The mold opening start position, the speed switching position, and the mold opening completion position are arranged in this order from the front side to the rear side and indicate start points and end points of sections where the speed is set. The speed is set for each section. The speed switching position may be one or more. The speed switching position may not be set. The mold opening start position and the mold clamping position may be the same as each other. In addition, the mold opening completion position and the mold opening/closing start position may be the same as each other.

In addition, instead of the speed, the positions, or the like of the crosshead 151, a speed, positions, or the like of the movable platen 120 may be set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 800 is changed by replacement of the mold unit 800, a temperature change of the mold unit 800, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a touch type where the movable mold 820 comes into contact with the stationary mold 810 becomes a predetermined angle.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is rotatably held by the toggle support 130, and a mold space adjustment motor 183 which rotates the screw nut 182 screwed to the screw shaft 181.

The screw shaft 181 and the screw nut 182 are provided for each tie bar 140. A rotation of the mold space adjustment motor 183 may be transmitted to a plurality of screw nuts 182 via a rotation transmission portion 185. The plurality of screw nuts 182 can be synchronously rotated with each other. In addition, it is possible to rotate the plurality of screw nuts 182 individually by changing a transmission path of the rotation transmission portion 185.

For example, the rotation transmission portion 185 includes a gear or the like. In this case, a driven gear is formed on an outer periphery of each screw nut 182, a drive gear is attached to an output shaft of the mold space adjustment motor 183, and an intermediate gear which engages with a plurality of driven gears and drives gears is rotatably held by a center portion of the toggle support 130. In addition, the rotation transmission portion 185 may include a belt, a pulley, or the like instead of the gear.

An operation of the mold space adjustment mechanism 180 is controlled by the control unit 700. The control unit 700 drives the mold space adjustment motor 183 to rotate the screw nut 182, and thus, the position of the toggle support 130 which rotatably holds the screw nut 182 with respect to the stationary platen 110 is adjusted, and the gap L between the stationary platen 110 and the toggle support 130 is adjusted.

In addition, the screw nut 182 may be fixed to the toggle support 130 and the tie bar 140 may be held rotatably with respect to the stationary platen 110. In this case, it is possible to adjust the gap L by rotating the tie bar 140.

In addition, the screw nut 182 maybe fixed to the stationary platen 110 and the tie bar 140 may be held rotatably with respect to the toggle support 130. In this case, it is possible to adjust the gap L by rotating the tie bar 140.

The gap L is detected using a mold space adjustment motor encoder 184. The mold space adjustment motor encoder 184 detects a rotation amount or a rotation direction of the mold space adjustment motor 183 and sends a signal indicating a detection result to the control unit 700. The detection result of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

In the mold space adjustment mechanism 180, the gap L is adjusted by rotating one of the screw shaft 181 and the screw nut 182 which are screwed to each other. A plurality of the mold space adjustment mechanisms 180 may be used, and a plurality of the mold space adjustment motors 183 may be used.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### (Ejector Unit)

Similarly to the descriptions of the mold clamping unit 100, in descriptions of the ejector unit 200, the movement direction (right direction in Figs. 1 and 2) of the movable platen 120 when the mold is closed is defined as the front side, and the movement direction (left direction in Figs. 1 and 2) of the movable platen 120 when the mold is opened is defined as the rear side.

The ejector unit 200 ejects the molding product from the mold unit 800. The ejector unit 200 includes an ejector motor 210, a motion conversion mechanism 220, an ejector rod 230, or the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 22 0 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 can move forward or rearward through a through-hole of the movable platen 120. A front end portion of the ejector rod 230 comes into contact with a movable member 830 which is disposed to be movable forward or rearward inside the movable mold 820. The front end portion of the ejector rod 230 may be connected to the movable member 830 or may not be connected to the movable member 830.

The ejector unit 200 performs an ejection process under the control of the control unit 700.

In the ejection process, the ejector motor 210 is driven to move the ejector rod 230 forward from a standby position to an ejection position at a set speed, and thus, the movable member 830 moves forward and the molding product is ejected. Thereafter, the ejector motor 210 is driven to move the ejector rod 230 rearward at a set speed, and thus, the movable member 830 moves rearward to an original standby position. For example, a position or speed of the ejector rod 230 is detected using an ejector motor encoder 211. The ejector motor encoder 211 detects the rotation of the ejector motor 210 and sends a signal indicating a detection result to the control unit 700. In addition, an ejector rod position detector which detects the position of the ejector rod 230 and an ejector rod speed detector which detects the speed of the ejector rod 230 are not limited to the ejector motor encoder 211, and a general detector can be used.

### (Injection Unit)

Unlike the descriptions of the mold clamping unit 100 or the descriptions of the ejector unit 200, in descriptions of the injection unit 300, a movement direction (left direction in Figs. 1 and 2) of a screw 330 during filling is referred to as a front side, and a movement direction (right direction in Figs. 1 and 2) of the screw 330 during plasticizing is referred to as a rear side.

The injection unit 300 is installed on a slide base 301 which is movable forward or rearward with respect to the frame 900, and is movable forward or rearward with respect to the mold unit 800. The injection unit 300 comes into contact with the mold unit 800, and the cavity space 801 inside the mold unit 800 is filled with the molding material by the injection unit 300. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a supply port 311 to the inner portion of the cylinder 310. For example, the molding material includes a resin or the like. For example, the molding material is formed into pellets and is supplied to the supply port 311 in a solid state. The supply port 311 is formed on a rear portion of the cylinder 310. A cooler 312 such as a water cooling cylinder is provided on an outer periphery of the rear portion of the cylinder 310. A heating unit 313 such as a band heater and the temperature detector 314 are provided on an outer periphery of the cylinder 310 on a front side of the cooler 312.

The cylinder 310 is divided into a plurality of zones in an axial direction (right and left directions in Figs. 1 and 2) of the cylinder 310. The heating unit 313 and the temperature detector 314 are provided in each zone. The control unit 700 controls the heating unit 313 such that a detection temperature of the temperature detector 314 becomes a set temperature for each zone.

The nozzle 320 is provided on the front end portion of the cylinder 310 and presses the mold unit 800. The heating unit 313 and the temperature detector 314 are provided on an outer periphery of the nozzle 320. The control unit 700 controls the heating unit 313 such that a detection temperature of the nozzle 320 becomes a set temperature.

The screw 330 is disposed in the cylinder 310 so as to be rotatable and movable forward or rearward. If the screw 330 rotates, the molding material is fed forward along spir al grooves of the screw 330. The molding material is gradua lly melted by heat from the cylinder 310 while being fed fo rward. The liquid molding material is fed to a front portio n of the screw 330 and is accumulated in the front portion of the cylinder 310, and thus, the screw 330 moves rearward. Thereafter, if the screw 330 moves forward, the liquid mo lding material accumulated in front of the screw 330 is inj ected from the nozzle 320 and the inside of the mold unit 8 00 is filled with the liquid molding material.

A backflow prevention ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward relatively to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the spiral grooves of the screw 330 and moves forward relatively to the screw 330 to an open position (refer to Fig. 1) at which the flow path of the molding material is open. Accordingly, the molding material is fed to the front side of the screw 330.

The backflow prevention ring 331 may be either a co-rotation type ring which rotates together with the screw 330 or a non-co-rotation type ring which does not rotate together with the screw 330.

In addition, the injection unit 300 may include a drive source which moves the backflow prevention ring 331 forward or rearward with respect to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example.

The pressure detector 360 detects a force transmitted between the injection motor 350 and the screw 330. The detected force is converted into a pressure by the control unit 700. The pressure detector 360 is provided on a transmission path of the force between the injection motor 350 and the screw 330 and detects a force applied to the pressure detector 360.

The pressure detector 360 sends a signal indicating a detection result to the control unit 700. The detection result of the pressure detector 360 is used to control or monitor a pressure received by the screw 330 from the molding material, a back pressure with respect to the screw 330, a pressure applied from the screw 330 to the molding material, or the like.

The injection unit 300 performs a filling process, a holding pressure process, a plasticizing process, or the like under the control of the control unit 700.

In the plasticizing process, the plasticizing motor 340 is driven to rotate the screw 330 at a set rotational speed and the molding material is fed forward along the spiral grooves of the screw 330 by the screw 330. According to this, the molding material is gradually melted. The screw 330 moves rearward as the liquid molding material is fed to the front side of the screw 330 and is accumulated in front of the cylinder 310. For example, the rotational speed of the screw 330 is detected using a plasticizing motor encoder 341. The plasticizing motor encoder 341 detects the rotation of the plasticizing motor 340 and sends a signal indicating a detection result to the control unit 700. In addition, a screw rotational speed detector which detects the rotational speed of the screw 330 is not limited to the plasticizing motor encoder 341, and a general detector may be used.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends a signal indicating a detection result to the control unit 700. If the screw 330 moves rearward to a plasticizing completion position and a predetermined amount of the molding materials is accumulated in front of the screw 330, the plasticizing process is completed.

In the filling process, the injection motor 350 is driven to move the screw 330 forward at a set speed, and the cavity space 801 inside the mold unit 800 is filled with the liquid molding material accumulated in front of the screw 330. For example, a position or speed of the screw 330 is detected using an injection motor encoder 351. The injection motor encoder 351 detects the rotation of the injection motor 350 and sends a signal indicating a detection result to the control unit 700. If the position of the screw 330 reaches a set position, switching (so called V/P switching) from the filling process to the holding pressure process is performed. The position at which the V/P switching is performed is also referred to a V/P switching position. The set speed of the screw 330 may be changed according to the position of the screw 330, the time, or the like.

In addition, in the filling process, after the position of the screw 330 reaches the set position, the screw 330 may be temporarily stopped at the set position, and thereafter, the V/P switching may be performed. Immediately before the V/P switching, instead of the screw 330 being stopped, the screw 330 may move forward or may move rearward at a very slow speed. Moreover, a screw position detector which detects the position of the screw 330 and a screw movement speed detector which detects the movement speed of the screw 330 are not limited to the injection motor encoder 351, and a general detector can be used.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 800. Insufficient molding materials can be replenished by cooling shrinkage in the mold unit 800. For example, the holding pressure is detected using the pressure detector 360. The pressure detector 360 sends a signal indicating a detection result to the control unit 700. A set value of the holding pressure may be changed according to an elapsed time from the starting of the holding pressure process, or the like.

In the holding pressure process, the molding material inside the cavity space 801 in the mold unit 800 is gradually cooled, and when the holding pressure process is completed, an inlet of the cavity space 801 is closed by a solidified molding material. This state is referred to a gate seal and a backflow of the molding material from the cavity space 801 is prevented. A cooling process starts after the holding pressure process . In the cooling process, solidification of the molding material in the cavity space 801 is performed. In order to shorten a molding cycle time, the plasticizing process may be performed during the cooling process.

In addition, the injection unit 300 of the present embodiment is an inline and screw type injection unit. However, the injection unit 300 may be a preplasticizing type injection unit. The preplasticizing type injection unit supplies the melted molding material inside a plasticizing cylinder to an injection cylinder and injects the molding material from the injection cylinder into the mold unit. A screw is disposed to be rotatable or rotatable and movable forward or rearward in the plasticizing cylinder and a plunger is disposed to be movable forward or rearward in the injection cylinder.

In addition, the injection unit 300 of the present emb odiment is a horizontal type injection unit in which the ax ial direction of the cylinder 310 is the horizontal directi on. However, the injection unit 300 may be a vertical type injection unit in which the axial direction of the cylinder 310 is a vertical direction. The mold clamping unit combin ed with the vertical type injection unit 300 may be a verti cal type mold clamping unit or a horizontal type mold injec tion unit. Similarly, the mold clamping unit combined with the horizontal type injection unit 300 may be a horizontal type mold clamping unit or a vertical type mold clamping unit.

### (Movement Unit)

Similarly to the descriptions of the injection unit 300, in descriptions of the movement unit 400, the movement direction (left direction in Figs. 1 and 2) of the screw 330 during filling is referred to as a front side, and the movement direction (right direction in Figs. 1 and 2) of the screw 330 during the plasticizing is referred to as a rear side.

The movement unit 400 moves the injection unit 300 forward or rearward with respect to the mold unit 800. In addition, the movement unit 400 presses the nozzle 320 to the mold unit 800 to generate a nozzle touch pressure. The movement unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a liquid pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction corresponding to a signal from the control unit 700 and by the rotation torque corresponding to the control signal from the control unit 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which is a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 moves forward, and thus, the nozzle 320 is pressed to the stationary mold 810. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 moves rearward and thus, the nozzle 320 is separated from the stationary mold 810.

In addition, in the present embodiment, the movement unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### (Control unit)

For example, the control unit 700 includes a computer, and as shown in Figs. 1 and 2, the control unit 700 includes a Central Processing Unit (CPU) 701, a recording medium 702 such as a memory, an input interface 703, and an output interface 704. The control unit 700 performs various controls by causing the CPU 701 to execute a program stored in the recording medium 702. In addition, the control unit 700 receives a signal from the outside through the input interface 703 and transmits a signal to the outside through the output interface 704.

The control unit 700 repeatedly performs the mold closing process, the mold clamping process, the mold opening process, or the like to repeatedly manufacture the molding product. In addition, the control unit 700 performs the plasticizing process, the filling process, the holding pressure process, or the like between the mold clamping processes. A series of operations to obtain the molding product, for example, an operation from the start of the plasticizing process to the start of the next plasticizing process is also referred to as a "shot" or a "molding cycle". In addition, a time required for once shot is also referred to as a "molding cycle time".

For example, the once molding cycle includes the plasticizing process, the mold closing process, the mold clamping process, the filling process, the holding pressure process, the cooling process, the mold opening process, and the ejection process in this order. Here, this order is an order of the start of each process. The filling process, the holding pressure process, and the cooling process are performed between the start of the molding clamping process to the end of the mold clamping process. The end of the mold clamping process coincides with the start of the mold opening process. In addition, in order to shorten the molding cycle time, the plurality of processes may be simultaneously performed. For example, the plasticizing process maybe performed during the cooling process of the previous molding cycle, and in this case, the mold closing process may be performed at an initial stage of the molding cycle . In addition, the filling process may start during the mold closing process. Moreover, the ejection process may be started during the mold opening process.

The control unit 700 is connected to an operation unit 750 or a display unit 760.

The operation unit 750 receives an input operation from a user and outputs a signal corresponding to the input operation to the control unit 700. In addition, the operation unit 750 includes a first button 751, a second button 752, a safety door switch 753, an emergency stop switch 754, a mold closing operation button 755, and an injection operation button 756.

In a case where the first button 751 is pressed, the first button 751 transmits a signal indicating an opening of a gate to the control unit 700. The control unit 700 opens the gate for supplying the liquid molding material to the cavity space 801. The first button 751 transmits the signal only while the first button 751 is continuously pressed.

Meanwhile, in a case where the second button 752 is pressed, the second button 752 transmits a signal indicating the opening of the gate to the control unit 700. The control unit 700 opens the gate for supplying the liquid molding material to the cavity space 801. In the case of the second button 752, once the button is pressed, the second button 752 continuously transmits the signal. That is, even if the second button 752 is not continuously pressed, the second button 752 continuously transmits a signal, and for example, this state is continued until the second button 752 is pressed again.

The safety door switch 753 is a switch which is turned on when a safety door provided in the injection molding machine 10 is opened. If the safety door switch 753 is turned on, the injection molding machine 10 stops all operations, and disables functions of the injection molding machine 10.

As described below, during a period when the second button 752 is pressed and the second button 752 continuously transmits the signal indicating the opening of the gate, the user approaches the injection molding machine 10 to remove or attach the cavity plate. In order to approach the injection molding machine 10, the safety door is opened and the safety door switch 753 is turned on. Originally, all functions of the injection molding machine 10 are disabled. However, during the period when the second button 752 is pressed and the second button 752 continuously transmits the signal indicating the opening of the gate, even when the safety door switch 753 is turned on, the opening of the gate is not disabled and is maintained.

Similarly to the case where the safety door switch 753 is turned on, in a case where the emergency stop switch 754 is pressed, all operations of the injection molding machine 10 are stopped, and the functions of the injection molding machine 10 are disabled. In this case, similarly to the case where the safety door switch 753 is turned, during the period when the second button 752 is pressed and the second button 752 continuously transmits the signal indicating the opening of the gate, the opening of the gate is not disabled and is maintained.

In addition, even in a case where other operations are performed by the operation unit 750, during the period when the second button 752 is pressed and the second button 752 continuously transmits the signal indicating the opening of the gate, the opening of the gate is not disabled and is maintained. For example, other operations include the mold closing operation button 755 or the injection operation button 756.

In a case where the mold closing operation button 755 is pressed, the movable platen 120 moves forward with respect to the stationary platen 110, and the mold closing is performed. In a case where the injection operation button 756, the injection unit 300 performs the filling process, the holding pressure process, or the like under the control of the control unit 700.

However, even in a case where the mold closing operation button 755 or the injection operation button 756 is pressed, during the period when the second button 752 is pressed and the second button 752 continuously transmits the signal indicating the opening of the gate, the opening of the gate is not disabled and is maintained.

The display unit 760 displays an operation screen corresponding to the input operation in the operation unit 750, under the control of the control unit 700.

The operation screen is used for the setting of the injection molding machine 10 or the like. A plurality of operation screens are provided, and thus, are displayed to be switched or to overlap each other. The user operates the operation unit 750 while viewing the operation screen displayed on the display unit 760 to perform the setting (including an input of a set value) of the injection molding machine 10 or the like.

For example, the operation unit 750 and the display unit 760 may be configured of a touch panel to be integrated with each other. The button such as the first button 751 or the second button 752 may be configured of a touch panel and may be configured of a physical push button. In addition, in the present embodiment, the operation unit 750 and the display unit 760 are integrated with each other. However, the operation unit 750 and the display unit 760 may be independently provided. In addition, a plurality of operation units 750 may be provided.

### (Mold Unit)

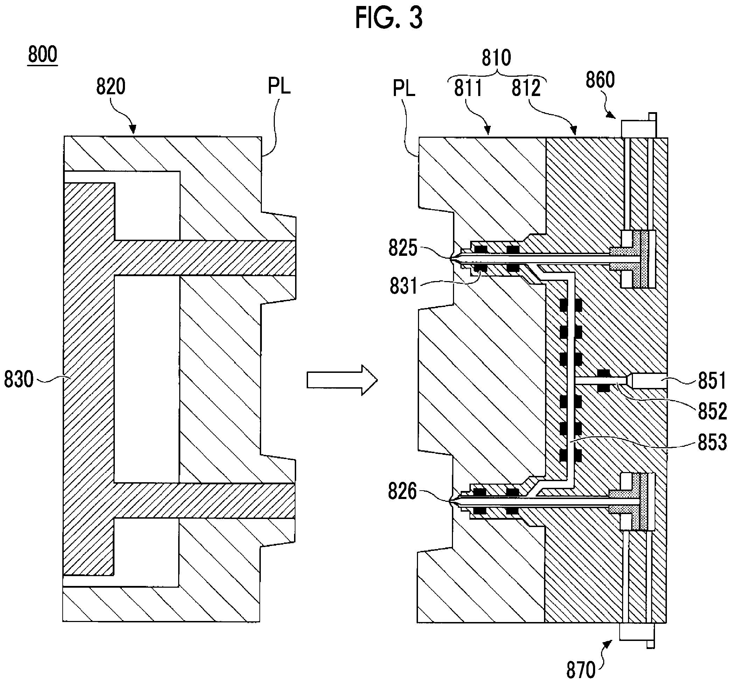

Next, the mold unit 800 according to the embodiment will be described with reference to Figs. 3 to 5. Fig. 3 is a sectional view showing the mold unit 800 when the mold is opened.

The mold unit 800 according to the embodiment is a mold unit which can be used to mold a plastic part.

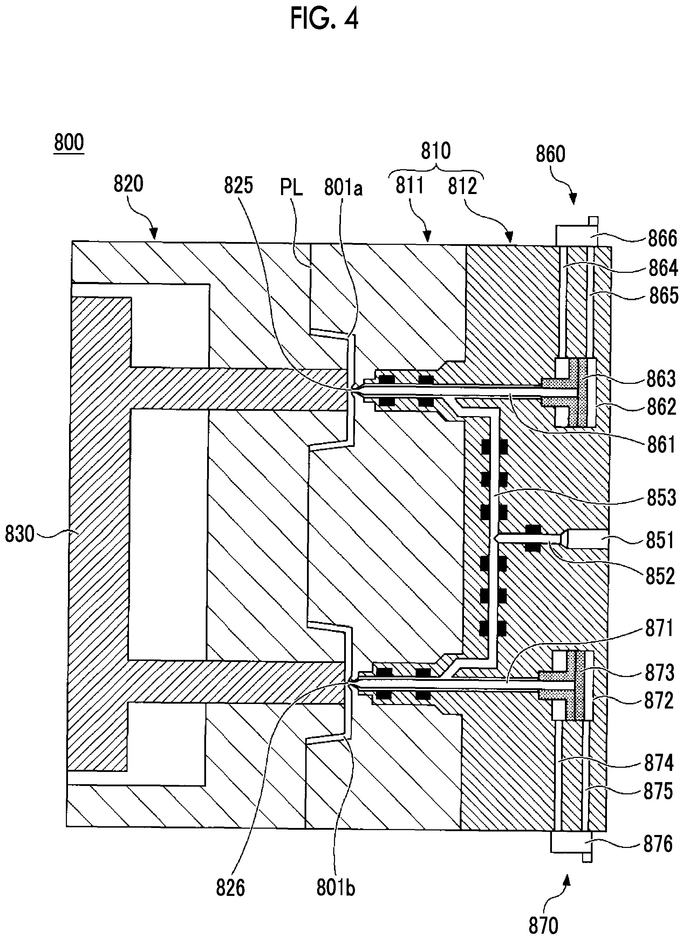

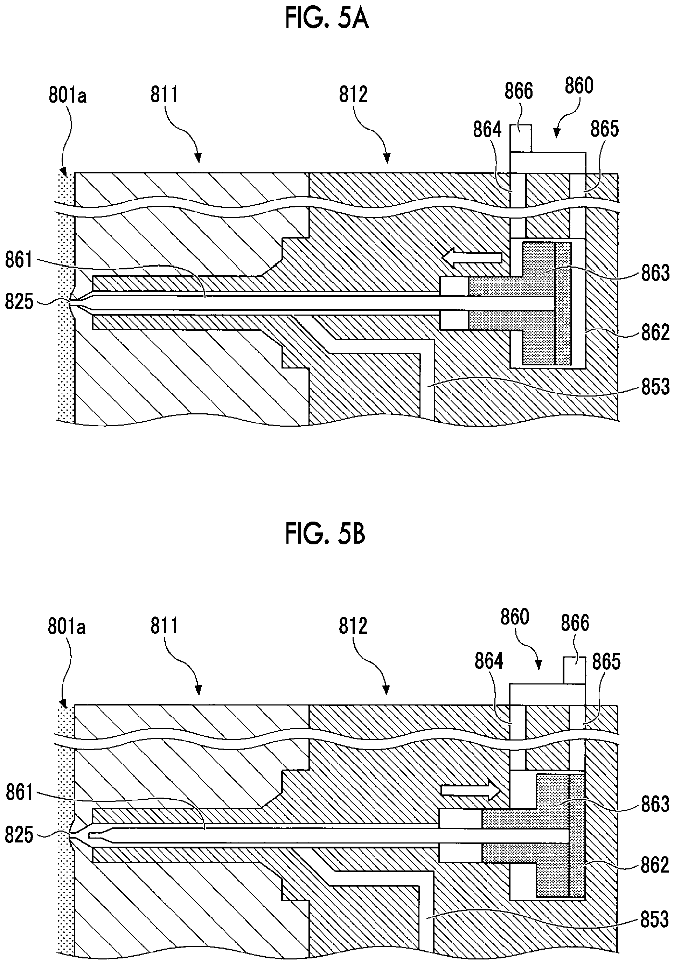

The mold unit 800 is a so-called hot runner type mold unit and constantly heats a spool 852 and a runner 853. Accordingly, when the liquid molding material filling the cavity space 801 of a mold is cooled and solidified, a mechanism which cuts off the runner 853 and the solidified molding product portion (in the cavity space) from each other is provided. This cut-off mechanism corresponds to gate valve mechanisms 860 and 870 in Figs. 3 and 4. However, in order to prevent complication of illustrations in Figs. 3 and 4, details of the gate valve mechanism are shown in Figs. 5A and 5B.

The mold unit 800 includes the stationary mold 810 and the movable mold 820. The stationary mold 810 is attached to the stationary platen 110 and the movable mold 820 is attached to the movable platen 120 (refer to Figs. 1 and 2).

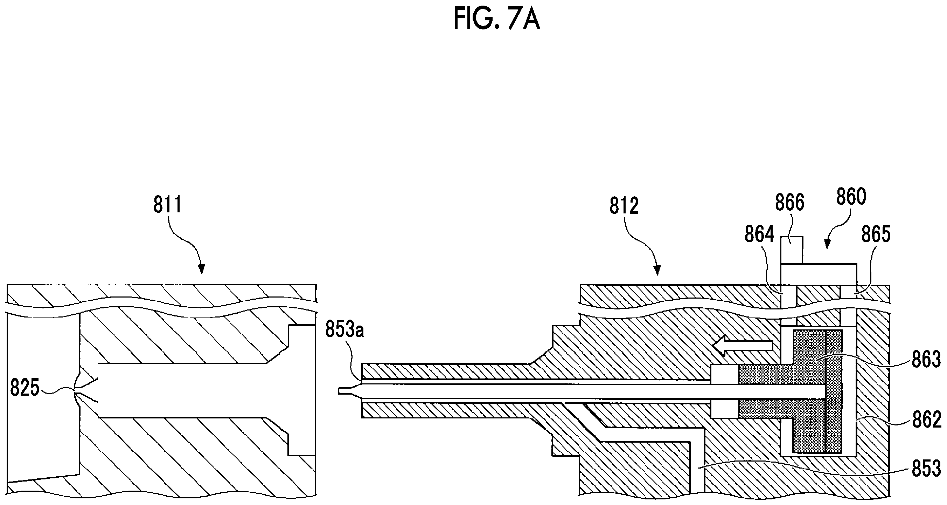

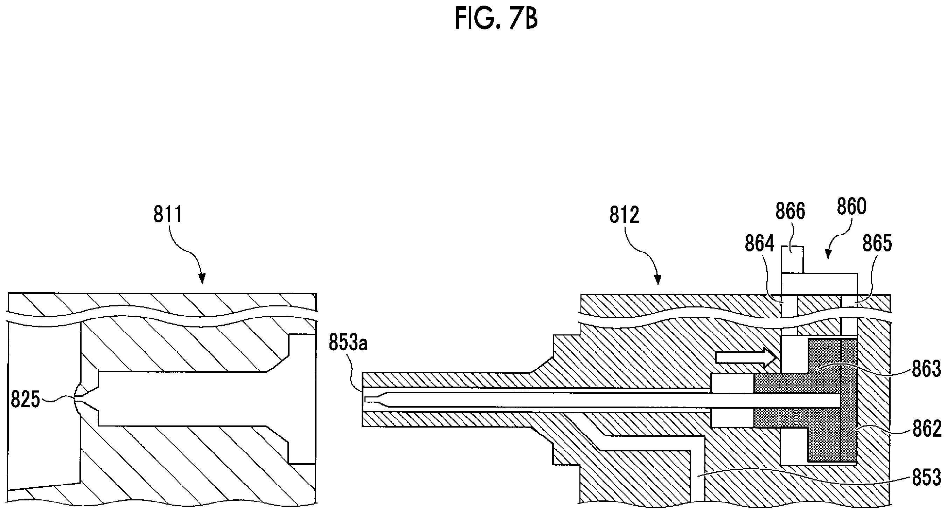

The stationary mold 810 includes a cavity plate 811 and a runner plate 812. In Fig. 3, the cavity plate 811 is indicated by oblique hatching having wide gaps, and the runner plate 812 is indicated by oblique hatching having narrow gaps. The cavity plate 811 and the runner plate 812 is configured to be separable from each other. This detail will be separately described in Figs. 7A and 7B.

A spool 852 which becomes a passage of a melted liquid molding material is formed inside the runner plate 812 and is connected to the spool 852 such that the runner 853 is formed. One end of the spool 852 is connected to a nozzle touch portion 851 which is formed on a side surface of the stationary mold 810. The nozzle 320 of the injection unit 300 is connected to the nozzle touch portion 851 (refer to Figs. 1 and 2).

The runner 853 is formed to branch off in the vertical direction in Fig. 3 at a connection portion between the runner 853 and the spool 852, and the runner 853 is connected to the gate 825 in an upward direction and to the gate 826 in a downward direction, respectively. A plurality of heaters 831 for heating the spool 852 and the runner 853 are disposed around the spool 852 and the runner 853. In order to maintain a melting state of the molding material in the spool 852 and the runner 853, a temperature control of each heater 831 is performed based a detection value of a temperature sensor (not shown) embedded in the stationary mold 810.

The state shown in Fig. 3 is a state where the mold unit 800 is opened, and in the case where the mold is closed, the movable mold 820 moves in a direction shown by a void arrow.

Fig. 4 shows the mold unit 800 in the state where the mold is closed. In Fig. 4, a so-called parting line is indicated by a line PL at a boundary between the stationary mold 810 and the movable mold 820.

In addition, at the boundary between the stationary mold 810 and the movable mold 820, a cavity space 801a is formed in a space to which the gate 825 is connected. Moreover, a cavity space 801b is formed in a space to which the gate 826 is connected.

The liquid molding material flows through the runner 853, fills the cavity space 801a via the gate 825, and fills the cavity space 801b via the gate 826. The filled liquid molding material is cooled and solidified, and thus, the molding product is formed. The mold unit 800 is a so-called two-piece mold unit which forms the molding product in each of the cavity spaces 801a and 801b.

The liquid molding material in the mold unit 800 is solidified, the molding product is formed, and thereafter, the movable mold 820 moves (mold is opened) . Thereafter, the movable member 830 is moved forward by the ejector rod 230, the molding product is ejected, and thus, the molding product solidified in the cavity spaces 801a and 801b is separated from the movable mold 820 and is taken out.

The gate valve mechanisms 860 and 870 are provided in the runner 853. The gate valve mechanism 860 opens or closes the gate 825 and the gate valve mechanism 870 opens or closes the gate 826.

The gate valve mechanism 860 includes a valve pin 861, an air cylinder 862, and a solenoid valve 866. The valve pin 861 is provided to be movable in the runner 853, and moves forward or rearward in the axial direction to close and open the gate 825. The air cylinder 862 drives the valve pin 861. The solenoid valve 866 controls the drive of the air cylinder 862.

Similarly, the gate valve mechanism 870 includes a valve pin 871, an air cylinder 872, and a solenoid valve 876. The valve pin 871 is provided to be movable in the runner 853, and moves forward or rearward in the axial direction to close and open the gate 826. The air cylinder 872 drives the valve pin 871. The solenoid valve 876 controls the drive of the air cylinder 872.

Figs. 5A and 5B are views showing a distal end portion of the valve pin 861 and a periphery thereof, and the gate valve mechanism 860. Fig. 5A shows a state where the gate 825 is closed and Fig. 5B shows a state where the gate 825 is open. Moreover, hereinafter, a "direction in which the valve pin 861 moves forward" indicates a direction of a void arrow shown in Fig. 5A, and a "direction in which the valve pin 861 moves rearward" indicates a direction of a void arrow shown in Fig. 5B. In addition, the arrow direction shown in each of Figs. 5A and 5B may indicate an axial direction of the valve pin 861.

The distal end portion of the valve pin 861 is formed to have an outer diameter d fitted to an inner diameter of the gate 825. As shown in Fig. 5A, if the valve pin 861 moves forward in the direction of the void arrow in Fig. 5A and the valve pin 861 is inserted into the gate 825, the gate 825 is closed, and the runner 853 and the cavity space 801a are cut off from each other. Accordingly, the liquid molding material cannot flow into the cavity space 801a from the runner 853.

Meanwhile, as shown in Fig. 5B, if the valve pin 861 moves rearward in the direction of the void arrow in Fig. 5B and the valve pin 861 is pulled out from the gate 825, the gate 825 is opened, and the runner 853 and the cavity space 801a communicate with each other. Therefore, the liquid molding material can flow from the runner 853 into the cavity space 801a via the gate 825.

A drive mechanism of the gate valve mechanism 860 is constituted by the air cylinder 862. A piston 863 and the valve pin 861 are disposed inside the air cylinder 862. The valve pin 861 is fixed to the piston 863 or is integrally formed with the piston 863. A compressed air is supplied to the air cylinder 862 such that the air cylinder 862 is driven, and thus, the piston 863 moves, and the valve pin 861 moves forward or rearward.

Specifically, as shown in Fig. 5A, the compressed air is supplied from an air supply/discharge port 865 by the solenoid valve 866, and the piston 863 and the valve pin 861 move forward inside the air cylinder 862 in the direction of the void arrow in Fig. 5A. Accordingly, the valve pin 861 is inserted into the gate 825, and thus, the gate 825 is closed.

In addition, as shown in Fig. 5B, the compressed air is supplied from an air supply/discharge port 864 by the solenoid valve 866, and the piston 863 and the valve pin 861 move rearward inside the air cylinder 862 in the direction of the void arrow in Fig. 5B. Accordingly, the valve pin 861 is pulled out from the gate 825, and thus, the gate 825 is opened.

For example, the solenoid valve 866 is a three-port electromagnetic valve and includes one intake port and two exhaust ports, and the intake port is connected to a compressor. By electrically switching the position of the electromagnetic valve, it is possible to switch the supply of the compressed air to the air supply/discharge port 864 and the air supply/discharge port 865. For example, in a case where the electromagnetic valve is positioned on one side, the compressed air is supplied from the intake port to the air supply/discharge port 864, and air inside the air cylinder 862 is exhausted from one exhaust port. In a case where the electromagnetic valve is positioned on the other side, the compressed air is supplied from the intake port to the air supply/discharge port 865, and air inside the air cylinder 862 is exhausted from the other exhaust port.

The control by the solenoid valve 866 is performed by the control unit 700. The control unit 700 controls the solenoid valve 866 according to a sequence when the injection molding is performed. Alternatively, the control unit 700 controls the solenoid valve 866 based on signals from the first button 751 and the second button 752 of the operation unit 750.

Moreover, the drive of the gate valve mechanism 860 is not limited to the air cylinder, and may be performed by a hydraulic cylinder, a servo motor, or a combination thereof.

In addition, in Figs. 5A and 5B, the distal end portion of the valve pin 861 and the periphery thereof, and the gate valve mechanism 860 are described. However, the descriptions are similarly applied to a distal end portion of the valve pin 871 and a periphery thereof and the gate valve mechanism 870.

### (Operation of Gate When Injection Molding Is Performed)

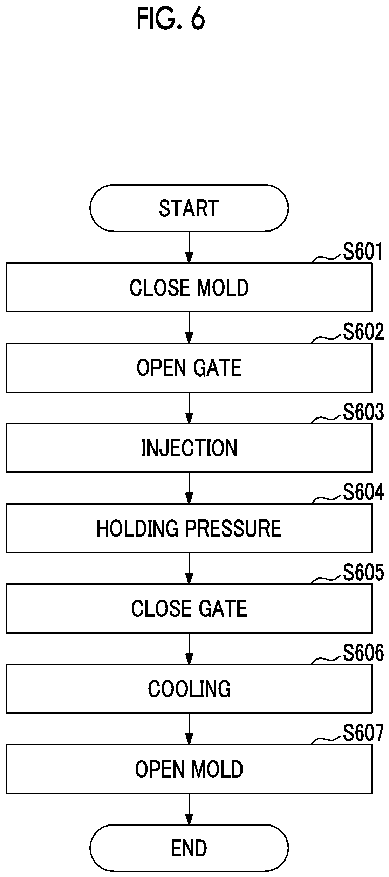

Here, an operation of the gate when the injection molding is performed will be described with reference to a flowchart (Fig. 6) indicating operations from the mold closing process to the mold opening process according to the embodiment.

First, in the mold closing process, the mold clamping unit 100 drives the mold clamping motor 160 to move the crosshead 151 forward to the mold closing completion position, moves the movable platen 120 forward, and causes the movable mold 820 to come into contact with the stationary mold 810.

The mold clamping unit 100 further drives the mold clamping motor 160 and further moves the crosshead 151 forward from the molding closing completion position to the mold clamping position, and thus, the mold clamping force is generated. When the mold is clamped, the cavity space 801 (refer to Fig. 2) is formed between the movable mold 820 and the stationary mold 810 (Step S601) .

Next, the control unit 700 controls the gate valve mechanisms 860 and 870, and respectively supplies the compressed air to the air supply/discharge ports 864 and 874 by the solenoid valves 866 and 876 (refer to Fig. 4). The piston 863 and the valve pin 861 move rearward inside the air cylinder 862, the valve pin 861 is pulled out from the gate 825, and the gate 825 is opened (refer to Figs. 5A and 5B). Similarly, the piston 873 and the valve pin 871 move rearward inside the air cylinder 872, the valve pin 871 is pulled out from the gate 826, and the gate 826 is opened (Step S602).

Next, the injection unit 300 drives the injection motor 350 to move the screw 330 forward and injects the liquid molding material accumulated in front of the screw 330 from the nozzle 320 (refer to Fig. 2). The liquid molding material flows through the runner 853 and is injected to the cavity spaces 801a and 801b in the mold unit 800 via the gates 825 and 826, and the cavity spaces 801a and 801b are filled with the liquid molding material (refer to Fig. 4, Step S603).

Next, in the holding pressure process, the injection unit 300 drives the injection motor 350 to press the screw 330 forward, and a holding pressure in a front end portion of the screw 330 is held at a set pressure (Step S604).

After the holding pressure process is completed, the control unit 700 controls the gate valve mechanism 860 and supplies the compressed air to the air supply/discharge port 865 by the solenoid valve 866. The piston 863 moves forward inside the air cylinder 862 together with the valve pin 861, the valve pin 861 is inserted into the gate 825, and the gate 825 is closed (refer to Figs. 5A and 5B).

Similarly, the control unit 700 controls the gate valve mechanism 870 and supplies the compressed air to the air supply/discharge port 875 by the solenoid valve 876. The piston 873 and the valve pin 871 move forward inside the air cylinder 872 in the axial direction, the valve pin 871 is inserted into the gate 826, and the gate 826 is closed (Step S605).

After the gate 825 and 826 are closed, the cooling process starts. In the cooling process, the molding material in the cavity spaces 801a and 801b is solidified (Step S606).

Next, in the molding opening process, the clamping unit 100 drives the mold clamping motor 160 to move the crosshead 151 rearward to the mold opening completion position, and thus, the movable platen 120 moves rearward, and the movable mold 820 is separated from the stationary mold 810.

In this way, when the injection molding is performed, the processes from the molding closing to the mold opening are performed. The gates 825 and 826 are opened at Step S602 and are closed at Step S605.

Each process is performed by the control unit 700. The control unit 700 controls each portion at a predetermined timing according to a preset sequence.

Moreover, at the time of non-filling in which the insides of the cavity spaces 801a and 801b are not filled with the liquid molding material, the valve pin 861 is inserted into the gate 825 and the gate 825 is closed. The valve pin 871 is inserted into the gate 826 and the gate 826 is closed. At the time of the above-described injection molding, when the cavity space is filled with the liquid molding material, the control unit 700 opens the gate 825 and 826.

### (Removal of Cavity Plate)

As described above, the stationary mold 810 according to the embodiment is configured such that the cavity plate 811 and the runner plate 812 can be separated from each other, and thus, the cavity plate 811 can be removed from the runner plate 812.

Figs. 7A 7B are views showing the distal end portion of the valve pin 861, the periphery thereof, and the gate valve mechanism 860 in a state where the runner plate and the cavity plate of the stationary mold are separated from each other according to the embodiment. Fig. 7A shows a state where the valve pin 861 moves forward and Fig. 7B shows a state where the gate 825 moves rearward. In addition, 7A and 7B show the distal end portion of the valve pin 861 and the periphery thereof and the gate valve mechanism 860. The same is applied to the distal end portion of the valve pin 871 and a periphery thereof and the gate valve mechanism 870.

As shown in Figs. 7A and 7B, the cavity plate 811 is removed from the runner plate 812 with a boundary portion of the runner plate 812 provided around the runner 853, the gate valve mechanism 860, or the like, as a boundary.

By removing the cavity plate 811, access to peripheries of the gates 825 and 826 is easy, and thus, it is possible to easily perform maintenance of the stationary mold 810 such as replacement or cleaning of a part around the gates 825 and 826. In addition, the cavity plate 811 is changed to a cavity plate 811 having a cavity space 801 having a different shape, and thus, it is possible to change the molding product to be formed, or the like.

However, as described above, at the time of the non-filling in which the cavity spaces 801a and 801b are not filled with the liquid molding material, the valve pin 861 is inserted into the gate 825 and the gate 825 is closed. As shown in Fig. 7A, the valve pin 861 protrudes from a connection portion 853a between the runner 853 and the gate 825. In this state, if the cavity plate 811 is removed, the valve pins 861 and 871 come into contact with the cavity plate 811, and thus, the valve pins 861 and 871 and the cavity plate 811 may be damaged.

In order to prevent the damage, a method of opening the gate 825 using the first button 751 is considered. That is, the user presses the first button 751, the heater 831 is turned off in a state where the valve pin 861 moves rearward, and a temperature of the liquid molding material in the runner 853 decreases such that the liquid molding material is solidified. The connection portion 853a between the runner 853 and the gate 825 is sealed by the solidified molding material, leakage of the molding material is prevented, and thereafter, the cavity plate 811 is removed. According to this method, the valve pin 861 is pulled out from the gate 825, and as shown in Fig. 7B, the valve pin 861 does not protrude from the connection portion 853a between the runner 853 and the gate 825. Accordingly, the damage caused by the contact between the valve pins 861 and 871 and the cavity plate 811 when the cavity plate 811 is removed is prevented. However, it is necessary for the user continuously to press the first button 751 until the liquid molding material is solidified, which may reduce the workability.

The injection molding machine 10 according to one embodiment includes the second button 752 which continuously transmits a signal indicating the opening of the gates 825 and 826 to the control unit 700 when the cavity plate 811 is removed.

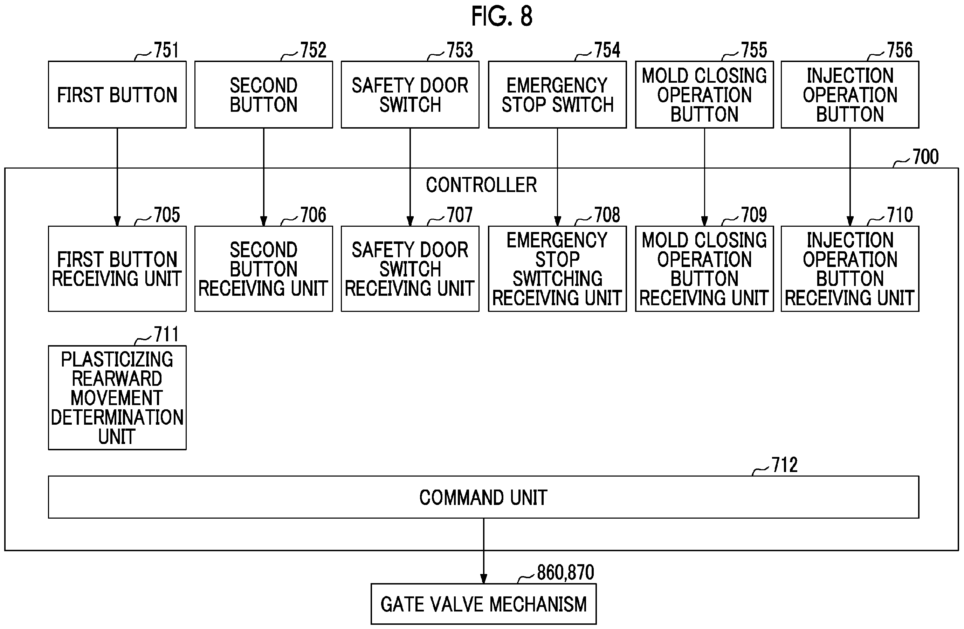

Fig. 8 is a functional block diagram showing components of a control unit according to the embodiment. In addition, each function block shown in Fig. 8 is a conceptual block, and it is not necessarily physically configured as shown in the drawings . It is possible to configure all or a portion of respective functional blocks by functionally or physically dispersing and coupling in arbitrary units . All or a portion of each processing function performed in each functional block can be realized by a program executed by the CPU or can be realized as hardware by wired logic.

As shown in Fig. 8, the control unit 700 includes a first button receiving unit 705, a second button receiving unit 706, a safety door switch receiving unit 707, an emergency stop switch receiving unit 708, a mold closing operation button receiving unit 709, an injection operation button receiving unit 710, a plasticizing rearward movement determination unit 711, and a command unit 712. In addition, the control unit 700 is electrically connected to the first button 751, the second button 752, the safety door switch 753, the emergency stop switch 754, the mold closing operation button 755, and the injection operation button 756. In addition, the control unit 700 is electrically connected to the gate valve mechanisms 860 and 870.

The first button receiving unit 705 receives a signal from the first button 751. The second button receiving unit 706 receives a signal from the second button 752. The safety door switch receiving unit 707 receives a signal from the safety door switch 753. The emergency stop switch receiving unit 708 receives a signal from the emergency stop switch 754. The mold closing operation button receiving unit 709 receives a signal from the mold closing operation button 755. The injection operation button receiving unit 710 receives a signal from the injection operation button 756.

The plasticizing rearward movement determination unit 711 determines a plasticizing rearward movement of the injection molding machine 10. Here, the plasticizing rearward movement means that the nozzle 320 is separated from the mold unit 800. For example, the plasticizing rearward movement is determined by detecting a signal indicating that the nozzle 320 does not come into contact with the nozzle touch portion 851. If the nozzle 320 is in contact with the nozzle touch portion 851, when the gates 825 and 826 are open, the liquid molding material may leak from the gates 825 and 826 due to a residual pressure inside the mold unit 800. For example, it is possible to prevent the leakage by determining the plasticizing rearward movement.

The command unit 712 opens or closes the gate 825, and opens or closes the gate 826. In a case where the first button receiving unit 705 receives a signal, the command unit 712 opens the gate 825 and 826 only while the button is being pressed continuously. In a case where the second button receiving unit 706 receives a signal, the command unit 712 continuously opens the gates 825 and 826. If any of the safety door switch receiving unit 707, the emergency stop switch receiving unit 708, the mold closing operation button receiving unit 709, and the injection operation button receiving unit 710 receives a signal, the command unit 712 maintains the openings of the gate 825 and 826 during a period when the second button 752 is pressed and the second button continuously transmits the signals indicating the openings of the gates 825 and 826.

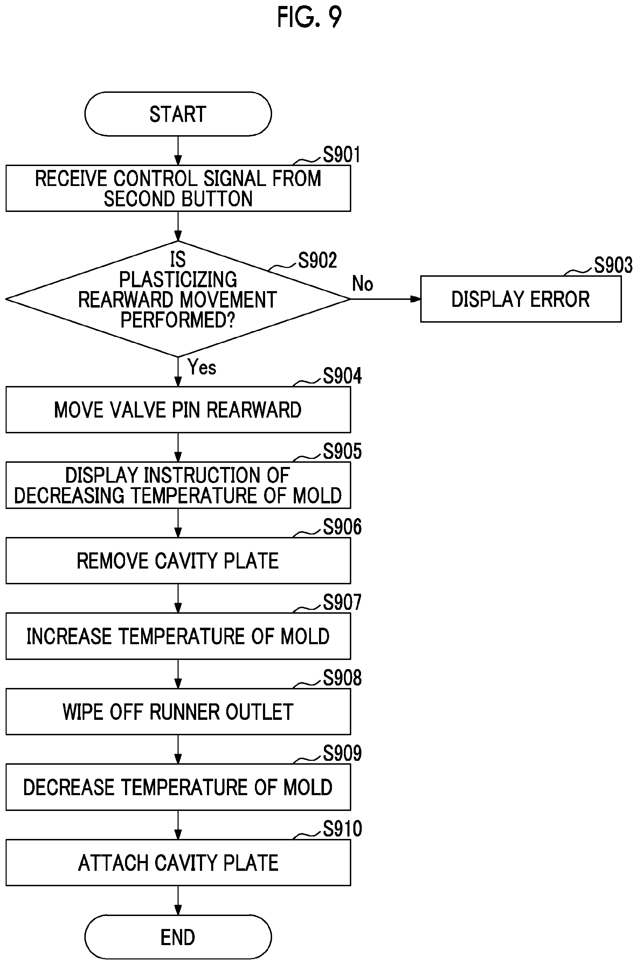

Next, a process of removing the cavity plate 811 of the stationary mold 810 and replacing the cavity plate 811 will be described with reference to Fig. 9. Fig. 9 is a flowchart showing a process of replacing the cavity plate of the stationary mold according to the embodiment.

First, if the user presses the second button 752 of the operation unit 750, the second button receiving unit 706 in the control unit 700 receives the signal from the second button 752 (Step S901).

Next, the plasticizing rearward movement determination unit 711 determines whether or not the plasticizing rearward movement is performed (Step S902). Accordingly, in Step S902, the plasticizing rearward movement is not performed, and whether or not the plasticizing rearward movement is performed is determined.

It is determined that the plasticizing rearward movement is not performed (No in Step S902), the control unit 700 displays an error message indicating that the plasticizing rearward movement is not performed on the display unit 760 (Step S903) .

Meanwhile, in a case where it is determined that the plasticizing rearward movement is performed (Yes in Step S902), the command unit 712 moves the valve pins 861 and 871 rearward. Accordingly, the valve pin 861 is pulled out from the gate 825 and the gate 825 is opened. In addition, the valve pin 871 is pulled out from the gate 826, and the gate 826 is opened (Step S904) .

During the period when the second button 752 is pressed and the gates 825 and 826 are continuously opened by the command unit 712, the gates 825 and 826 are closed by the operations of other operation units, and the open states of the gates 825 and 826 are maintained even in the case where other operation units are operated in order to prevent the valve pins 861 and 871 from protruding. In addition, for example, the operations of other operation units include an operation of turning on the safety door switch 753, an operation with respect to the emergency stop switch 754, an operation of pressing the mold closing operation button 755, an operation of pressing the injection operation button 756, or the like.

As described above, if the safety door switch 753 is turned on or the emergency stop switch 754 is operated, the functions of the injection molding machine 10 are disabled. However, the transmission of the signal indicating the openings of the gates 825 and 826 by the second button 752 is maintained even in the above-described case.

In addition, even when the safety door switch 753 is turned on, the emergency stop switch 754 is operated, and the transmission of the signal indicating the opening of the gate by the second button 752 is interrupted, the driving by the gate valve mechanisms 860 and 870 may be maintained such that the open state of the gate is maintained.

Next, the control unit 700 displays an instruction of decreasing the temperature of the mold unit 800 on the display unit 760 (Step S905). The user views the instruction of the display unit 760 to turn off the heater 831 and decreases the temperature of the mold unit 800. If the temperature of the liquid molding material in the runner 853 decreases and the liquid molding material is solidified, the connection portions between the runner 853, and the gates 825 and 826 are sealed by the solidified molding material. Accordingly, leakage of the molding material from the connection portions between the runner 853, and the gates 825 and 826 is prevented. In addition, according to the decrease in the temperature of the mold unit, safety of the user when the cavity plate 811 is removed is secured. In addition, the operation of turning off the heater 831 may be automatically performed by the control unit 700 after the rearward movements of the valve pins 861 and 871 are performed.

Next, the user removes the cavity plate 811 from the runner plate 812 (Step S906). In this case, since the valve pin 861 moves rearward from the gate 825, the contact between the valve pin 861 and the cavity plate 811 is prevented. In addition, since the valve pin 871 moves rearward from the gate 826, the contact between the valve pin 871 and the cavity plate 811 is prevented.

Specifically, as shown in Fig. 7B, the valve pin 861 moves rearward in the axial direction, is pulled out from the gate 825, and does not protrude from the connection portion 853a between the runner 853 and the gate 825. Accordingly, the cavity plate 811 does not come into contact with the valve pin 861. In addition, the valve pin 871 moves rearward in the axial direction, is pulled out from the gate 826, and does not protrude from the connection portion between the runner 853 and the gate 826. Accordingly, the cavity plate 811 does not come into contact with the valve pin 871. In this way, the damages of the valve pins 861 and 871 and the cavity plate 811 are prevented.

Returning to Fig. 9, after the cavity plate 811 is removed, the user turns on the heater 831 to increase the temperature of the mold unit 800 (Step S907). The temperature of the solidified molding material in the runner 853 increases to melt the solidified molding material, and the seal by the molding material is released in the connection portions between the runner 853 and the gates 825 and 826.

Next, the user wipes off the liquid molding material in the connection portion between the runner 853 and the gates 825 and 826, and removes the unnecessary molding material inside the runner 853 (Step S908).

Next, the user turns on the heater 831 to decrease the mold unit 800 (Step S909) . Accordingly, safety of the user when the cavity plate 811 is attached to the runner plate 812 is secured.

Next, the user attaches the replaced cavity plate 811 to the runner plate 812 (Step S910).

In this way, it is possible to remove the cavity plate 811 from the runner plate 812 and replace the cavity plate 811. In addition, processing (processing subsequent to Step S904) after the valve pins 861 and 871 move rearward and the gates 825 and 826 are opened can be appropriately changed. In addition, for example, the period when the second button 752 is pressed and the command unit 712 continuously opens the gates 825 and 826 is released by pressing the second button 752 again.

As described above, according to the present embodiment, the injection molding machine 10 has the first button which transmits the instruction of opening the gates 825 and 826 in the mold unit 800 only while the first button being continuously pressed and the second button which continuously transmits the instruction. In a case where the cavity plate 811 is removed to perform the maintenance, replacement, or the like, the user presses the second button, and thus, the gates 825 and 826 are continuously open. The valve pin 861 is separated from the gate 825 and does not protrude from the connection portion between the runner 853 and the gate 825. In addition, the valve pin 871 is separated from the gate 826 and does not protrude from the connection portion between the runner 853 and the gate 826. Accordingly, it is possible to prevent the valve pins 861 and 871 from coming into contact with the cavity plate 811 when the cavity plate 811 is removed, and it is possible to prevent the damages of the valve pins 861 and 871 and the cavity plate 811. In addition, when the cavity plate is removed, it is not necessary to continuously press the first button so as to open the gates 825 and 826, and thus, it is possible to improve removal workability of the cavity plate in the hot runner mold.

According to the present embodiment, in the injection molding machine 10, at the time of the non-filling when the insides of the cavity spaces 801a and 801b are not filled with the liquid molding material, the valve pin 861 is inserted into the gate 825 and the gate 825 is closed. In addition, the valve pin 871 is inserted into the gate 826 and closed. As a result, except for the time of the injection molding, it is possible to prevent the molding material from being erroneously injected. Meanwhile, the injection molding machine 10 includes the first button of transmitting the instruction of opening the gates 825 and 826 in the mold unit 800 only while the first button being continuously pressed. In a case where it is desired to check the operation of the gates 825 and 826 before the injection molding is performed, the user continuously presses the first button, and thus, it is possible to simply open the gates 825 and 826. Accordingly, it is possible to easily check the operation of the gates 825 and 826 while preventing the molding material from being erroneously injected.

According to the present embodiment, during the period when the second button 752 is pressed and the second button 752 continuously transmits the instruction of opening the gates 825 and 826, the openings of the gates 825 and 826 are maintained even in a case where other operations are performed. Accordingly, it is possible to prevent the gate 825 from being closed by the operations of other operation units during the decrease in the temperature of the mold unit 800 and the valve pin 861 from protruding and being damaged. In addition, it is possible to prevent the gate 826 from being closed and the valve pin 871 from protruding and being damaged. In addition, other operations include the operation of turning on the safety door switch 753, the operation with respect to the emergency stop switch 754, the operation of pressing the mold closing operation button 755, the operation of pressing the injection operation button 756, or the like.

According to the present embodiment, the command unit 712 opens the gates 825 and 826 in a case where the nozzle 320 is separated from the runner plate 812. Accordingly, when the gates 825 and 826 are open, it is possible to prevent the liquid molding material from leaking from the gates 825 and 826 by the residual pressure inside the mold unit 800.

In the present embodiment, the example in which the stationary mold 810 includes the gates 825 and 826 is described. However, the movable mold 820 may have the gates 825 and 826. In a case where the movable mold 820 has the gate 825 and 826, the runners 853 are provided inside both of the stationary mold 810 and the movable mold 820 to be connected to the gates 825 and 826 of the movable mold 820.

In addition, in a case where the cavity plate 811 is removed, an operation input of the second button 752 may be enabled. This is to prevent the gates 825 and 826 from being opened more than necessary. For example, a maintenance button of the cavity plate 811 is provided, and when the maintenance button is pressed, the function of the second button 752 is enabled. In addition, the buttons for moving the valve pins 861 and 871 rearward may be commonly used as one button, and the function may be changed by turning on and off the above-described maintenance button. For example, in a case where the maintenance button is turned off, similarly to the function of the first button 751, a command for moving the valve pins 861 and 871 rearward while the first button is continuously pressed may be transmitted. In addition, in a case where the maintenance button is turned on, similarly to the function of the second button, a command for continuously pressing the button and moving the valve pins 861 and 871 rearward may be transmitted.

Hereinbefore, the embodiment of the injection molding machine or the like is described. However, the present invention is not limited to the above-described embodiment or the like, and various modifications and improvements can be made within the scope of the present invention described in claims.

### Brief Description of the Reference Symbols

- 10:: injection molding machine
- 700:: control unit
- 705:: first button receiving unit
- 706:: second button receiving unit
- 707:: safety door switch receiving unit
- 708:: emergency stop switch receiving unit
- 709:: mold closing operation button receiving unit
- 710:: injection operation button receiving unit
- 711:: plasticizing rearward movement determination unit
- 712:: command unit
- 750:: operation unit
- 751:: first button
- 752:: second button
- 753:: safety door switch
- 754:: emergency stop switch
- 755:: mold closing operation button
- 756:: injection operation button
- 800:: mold unit
- 801, 801a, 801b:: cavity space
- 810:: stationary mold
- 811:: cavity plate
- 812:: runner plate
- 820:: movable mold
- 825, 826:: gate
- 831:: heater
- 853:: runner
- 860, 870:: gate valve mechanism
- 861, 871:: valve pin
- 862, 872:: air cylinder
- 863, 873:: piston
- 866, 876:: solenoid valve

## Claims

1. An injection molding machine (10) comprising:
a cavity plate (811) which includes a gate (825, 826) of a cavity space (801, 801a, 801b);
a runner plate (812) which includes a runner (853) connected to the gate (825, 826);
a valve pin (861, 871) which closes the gate (825, 826), the runner (853) and the cavity space (801, 801a, 801b) being cut off from each other or communicating with each other by the valve pin (861, 871);
a drive unit which drives the valve pin (861, 871);
a control unit (700) which controls the drive unit; and
an operation unit (750) which performs an operation input for transmitting a command for opening the gate (825, 826) by the control unit (700),
**characterized in that**
the operation unit (750) includes a button, and
the control unit (700) continuously transmits a command for opening the gate (825, 826) if the button is pressed.

2. The injection molding machine (10) according to claim 1,
wherein the operation unit (750) includes a first button (751) and a second button (752), and
wherein the control unit (700) transmits the command for opening the gate (825, 826) only while the first button (751) is continuously pressed and continuously transmits the command for opening the gate (825, 826) if the second button (752) is pressed, and the second button (752) is the button.

3. The injection molding machine (10) according to claim 1 or 2,
wherein the control unit (700) maintains an open state of the gate (825, 826) by the drive unit even when other operations are performed by the operation unit (750) while the command for opening the gate (825, 826) is continuously transmitted by the operation input of the button.

4. The injection molding machine (10) according to any one of claims 1 to 3,
wherein a nozzle (320) of an injection unit is connected to or separated from the runner plate (812), and
wherein the control unit (700) transmits the command for opening the gate (825, 826) in a case where the nozzle (320) is separated from the runner plate (812).

5. The injection molding machine (10) according to any one of claims 1 to 4,
wherein the control unit (700) continuously transmits the command for opening the gate (825, 826) by an operation input of the button in a case where the cavity plate (811) is removed from the runner plate (812).

6. The injection molding machine (10) according to claim 3,
wherein other operation inputs include at least one of a safety door switch (753) and an emergency stop switch (754).

## Patentansprüche

1. Spritzgießmaschine (10), umfassend:
eine Kavitätsplatte (811), die einen Anschnitt (825, 826) einer Kavität (801, 801a, 801b) umfasst,
eine Angussplatte (812), die einen mit dem Anschnitt (825, 826) verbundenen Angusskanal (853) umfasst,
einen Ventilzapfen (861, 871), der den Anschnitt (825, 826) verschließt, wobei der Angusskanal (853) und die Kavität (801, 801a, 801b) durch den Ventilzapfen (861, 871) voneinander abtrennt oder miteinander kommunizieren,
eine Antriebseinheit, die den Ventilzapfen (861, 871) antreibt;
eine Steuereinheit (700), welche die Antriebseinheit steuert; und
eine Bedienungseinheit (750), die eine Bedienungseingabe zum Übermitteln eines Befehls zum Öffnen des Anschnitts (825, 826) durch die Steuereinheit (700) durchführt,
**dadurch gekennzeichnet, dass**
die Bedienungseinheit (750) einen Knopf umfasst und
die Steuereinheit (700) kontinuierlich einen Befehl zum Öffnen des Anschnitts (825, 826) übermittelt, wenn der Knopf gedrückt wird.

2. Spritzgießmaschine (10) nach Anspruch 1,
wobei die Bedienungseinheit (750) einen ersten Knopf (751) und einen zweiten Knopf (752) umfasst und
wobei die Steuereinheit (700) den Befehl zum Öffnen des Anschnitts (825, 826) nur übermittelt, während der erste Knopf (751) kontinuierlich gedrückt wird, und kontinuierlich den Befehl zum Öffnen des Anschnitts (825, 826) übermittelt, wenn der zweite Knopf (752) gedrückt wird, und der zweite Knopf (752) der Knopf ist.

3. Spritzgießmaschine (10) nach Anspruch 1 oder 2,
wobei die Steuereinheit (700) einen offenen Zustand des Anschnitts (825, 826) durch die Antriebseinheit selbst dann aufrechterhält, wenn andere Bedienungen durch die Bedienungseinheit (750) durchgeführt werden, während der Befehl zum Öffnen des Anschnitts (825, 826) durch die Bedienungseingabe des Knopfs kontinuierlich übermittelt wird.

4. Spritzgießmaschine (10) nach einem der Ansprüche 1 bis 3,
wobei eine Düse (320) einer Einspritzeinheit mit der Angussplatte (812) verbunden oder von derselben getrennt ist und
wobei die Steuereinheit (700) den Befehl zum Öffnen des Anschnitts (825, 826) in einem Fall übermittelt, in dem die Düse (320) von der Angussplatte (812) getrennt ist.

5. Spritzgießmaschine (10) nach einem der Ansprüche 1 bis 4,
wobei die Steuereinheit (700) in einem Fall, in dem die Kavitätsplatte (811) von der Angussplatte (812) entfernt ist, den Befehl zum Öffnen des Anschnitts (825, 826) kontinuierlich durch eine Bedienungseingabe des Knopfs übermittelt.

6. Spritzgießmaschine (10) nach Anspruch 3,
wobei andere Bedienungseingaben wenigstens eines von einem Sicherheitstürschalter (753) und einem Notausschalter (754) umfassen.

## Revendications

1. Une machine de moulage par injection (10) comprenant :
une plaque de matrice (811) qui comprend un point d'injection (825, 826) d'un espace de matrice (801, 801a, 801b) ;
une plaque de canal de coulée (812) qui comprend un canal de coulée (853) relié au point d'injection (825, 826) ;
une tige de vanne (861, 871) qui ferme le point d'injection (825, 826), le canal de coulée (853) et l'espace de matrice (801, 801a, 801b) étant séparés l'un de l'autre ou communiquant l'un avec l'autre à l'aide de la tige de vanne (861, 871) ;
une unité d'entraînement qui entraîne la tige de vanne (861, 871) ;
une unité de commande (700) qui contrôle l'unité d'entraînement ; et
une unité d'exploitation (750) qui effectue une saisie d'opération afin de transmettre une commande destinée à ouvrir le point d'injection (825, 826) à l'aide de l'unité de commande (700),
**caractérisée en ce que**
l'unité d'exploitation (750) comprend un bouton, et
l'unité de commande (700) transmet en continu une commande destinée à ouvrir le point d'injection (825, 826) si le bouton est enfoncé.

2. La machine de moulage par injection (10) selon la revendication 1,
dans laquelle l'unité d'exploitation (750) comprend un premier bouton (751) et un second bouton (752), et
dans laquelle l'unité de commande (700) transmet la commande destinée à ouvrir le point d'injection (825, 826) uniquement lorsque le premier bouton (751) est enfoncé en continu, et transmet en continu la commande destinée à ouvrir le point d'injection (825, 826) si le second bouton (752) est enfoncé, et le second bouton (752) est le bouton.

3. La machine de moulage par injection (10) selon la revendication 1 ou 2,
dans laquelle l'unité de commande (700) maintient un état ouvert du point d'injection (825, 826) à l'aide de l'unité d'entraînement, même lorsque d'autres opérations sont effectuées par l'unité d'exploitation (750) pendant que la commande destinée à ouvrir le point d'injection (825, 826) est transmise en continu par l'enfoncement du bouton.

4. La machine de moulage par injection (10) selon l'une quelconque des revendications 1 à 3,
dans laquelle une buse (320) d'une unité d'injection est reliée à ou séparée de la plaque de canal de coulée (812), et
dans laquelle l'unité de commande (700) transmet la commande destinée à ouvrir le point d'injection (825, 826) lorsque la buse (320) est séparée de la plaque de canal de coulée (812).

5. La machine de moulage par injection (10) selon l'une quelconque des revendications 1 à 4,
dans laquelle l'unité de commande (700) transmet en continu la commande destinée à ouvrir le point d'injection (825, 826) par l'enfoncement du bouton lorsque la plaque de matrice (811) est retirée de la plaque de canal de coulée (812).

6. La machine de moulage par injection (10) selon la revendication 3,
dans laquelle d'autres moyens d'action comprennent au moins l'un d'un bouton de porte de sécurité (753) et d'un bouton d'arrêt d'urgence (754).
